# EUROPEAN PATENT SPECIFICATION

(11) **EP 3 173 907 B1**
(45) Date of publication and mention of the grant of the patent: **04.09.2019**
(21) Application number: 14881678.8
(22) Date of filing: 28.10.2014
(51) Int. Cl.: G06F 3/03, G06F 3/044

(54) **CAPACITIVE TOUCHSCREEN, TERMINAL, INTERCOMMUNICATION METHOD AND CORRESPONDING PROGRAM AND CARRIER**
KAPAZITIVER BERÜHRUNGSBILDSCHIRM, ENDGERÄT, WECHSELSPRECHVERFAHREN UND ZUGEHÖRIGES PROGRAMM UND TRÄGER
ÉCRAN TACTILE CAPACITIF, TERMINAL, PROCÉDÉ D'INTERCOMMUNICATION, ET PROGRAMME ET SUPPORT CORRESPONDANTS

(30) Priority: 23.07.2014 CN 201410353460
(43) Date of publication of application: 31.05.2017
(73) Proprietor: ZTE Corporation, Shenzhen City, Guangdong Province 518057 (CN)
(72) Inventor: YUAN, Biao, Shenzhen Guangdong 518057 (CN)
(74) Representative: Aipex B.V.
(86) International application number: PCT/CN2014/089685
(87) International publication number: WO 2015/117420

(56) References cited:
- EP-A2- 2 662 757
- WO-A1-2013/117815
- CN-A- 103 645 813
- CN-U- 203 658 986

## Description

### Technical Field

The present invention relates to the technical field of the capacitive touch screen, and in particular to a capacitive touch screen, a terminal, an intercommunication method among terminals and a corresponding program and a carrier.

### Background of the Related Art

Currently, one direction of the development of the mobile phones and other terminal devices is to let all types of devices be interconnected. Specifically, the terminals, such as, the mobile phone, etc., are relatively independent of each other, while we need to find a solution to make them better work together, it is hoped that the terminals, such as the mobile phone, etc., can better interact or share contents with the tablet PCs or the PC computers (and the wearable devices in the future), and it is also hoped that they can interconnect with the devices of other people around to share contents or play games.

How to realize the interconnection is a problem considered by each manufacturer, and the current technology is achieved mainly by means of adding additional chips or adding the transmission apparatus and receiving apparatus; for example, through Bluetooth, WIFI (direct WLAN), infrared and even Near Field Communication (NFC), all add corresponding chips and add transmission and receiving apparatus without exception, which makes the terminal device more and more complex, and the cost high.

The document EP 2662757 A2 discloses a coordinates measurement system for measuring positions of a finger and a coordinates indication device other than the finger, which determines the touched position of an object such as a stylus pen, while using a single touch screen.

### Summary of the Invention

A capacitive touchscreen, a terminal, an intercommunication method among terminals and a corresponding program and carrier according to independent claims are provided. Further improvements and embodiments are provided in the dependent claims.

Also provided is
a capacitive touchscreen, including: a touch control panel and a drive chip connected with the touch control panel, herein,
the touch control panel includes a substrate layer, a thin-film conductor layer and a protective layer covering the thin-film conductor layer;
the thin-film conductor layer includes multiple thin-film conductors, and the multiple thin-film conductors are arranged on the substrate layer in a horizontal/vertical direction by taking a horizontal/vertical resolution of the touchscreen as a reference;
the drive chip includes a transmission unit and a receiving unit, herein,
the transmission unit is arranged to: generate a high-frequency excitation signal and load the high-frequency excitation signal onto each thin-film conductor; and
the receiving unit is arranged to: receive a frequency signal one by one, in a wireless receiving manner, which is output after the high-frequency excitation signal passes through each thin-film conductor, and determine a touch position according to a change of the frequency signal before and after the touch.

Alternatively, the receiving unit is arranged to determine the touch position according to the change of the frequency signal before and after the touch by the following manner:
for each thin-film conductor, comparing a received frequency signal with a reference frequency without a touch, determining that there is a touch operation when a comparison result is inconsistent, and determining the touch position on the thin-film conductor according to a change amount of the frequency signal.

Alternatively, the drive chip further includes a band-pass filter, herein:
the band-pass filter is arranged to: filter an interference frequency signal received by the receiving unit.

Alternatively, the transmission unit is arranged to generate the high-frequency excitation signal and load the high-frequency excitation signal onto each thin-film conductor by the following manner:
after generating the high-frequency excitation signal, loading the high-frequency excitation signal onto each thin-film conductor through a flexible printed circuit (FPC).

Also provided is a terminal, including an above capacitive touchscreen.

Also provided is an intercommunication method among capacitive touchscreen terminals, including:
enabling intercommunication between a master terminal device and a slave terminal device;
within a specified distance range, the slave terminal device receiving a frequency signal which is output after a high-frequency excitation signal passes through each thin-film conductor in the master terminal device through a receiving unit of the slave terminal device in real time; and
the slave terminal device comparing the frequency signal with a pre-acquired reference frequency without a touch of the master terminal device, calculating a touch position when a comparison result is inconsistent, and responding to a touch operation of the master terminal device on the slave terminal device itself.

Alternatively, the step of enabling intercommunication between the master terminal device and the slave terminal device includes:
the master terminal device transmitting the reference frequency to the slave terminal device, and performing a clock synchronization with the slave terminal device and marking an identification label.

Alternatively, the specified distance range is a distance range within which the frequency signal output by the master terminal device can be transmitted.

Alternatively, the step of the slave terminal device calculating the touch position includes:
the slave terminal device detecting whether a screen ratio of the master terminal device is same with a screen ratio of the slave terminal device; if yes, directly calculating the touch position; otherwise, calculating the touch position after performing a screen ratio conversion.

Alternatively, after a step of the slave terminal device responding to the touch operation on the slave terminal device itself, the method further includes:
the slave terminal device reporting the responding action to the master terminal device, and waiting for an indication of the master terminal device.

Also provided is a computer program, including program instructions, when the program instructions are executed by a capacitive touchscreen terminal device, the capacitive touchscreen terminal device is enabled to execute the above intercommunication method.

Also provided is a carrier carrying an above computer program.

The beneficial effects of the technical scheme of the present invention are as follows:
the capacitive touchscreen of the technical scheme of the present invention decreases the etching process and reduces the manufacturing cost compared with the relevant capacitive touchscreen. In addition, the capacitive touchscreen in the embodiment of the present invention improves the existed drive chip, sets a wireless receiving antenna in the receiving unit, enables the receiving unit to wirelessly receive signals, and provides the necessary technical support for the realization of the end-to-end wireless communication among the terminals.

The intercommunication method among the terminals in the present embodiment is a new method which starts from the working principle of the substrate layers of the terminal components of their own, performs the touchscreen interconnection via frequency signals, and then achieves the wireless interconnection of the terminal devices and the end-to-end communication. The method does not need to increase the additional communication facilities, saves the production cost, and has simple operation and convenient popularization.

### Brief Description of Drawings

In order to illustrate more clearly the technical schemes in the embodiment of the present invention or the conventional art, the accompanying drawings required to be used in the description of the embodiment or the conventional art are simply introduced hereinafter. Obviously, the accompanying drawings described hereinafter are only some embodiments of the present invention; for those skilled in the art, other drawings can further be acquired according to those accompanying drawings in view of the appended claims.
FIG. 1 is a structure diagram of a capacitive touchscreen provided by embodiment one of the present invention;
FIG. 2 is a flow chart of an intercommunication method among terminals provided by embodiment three of the present invention;
FIG. 3 is a flow chart of a method described in an implementation example according to embodiment three of the present invention.

### Preferred Embodiments of the Invention

The technical solution in the embodiment of the present invention is clearly and fully described in detail with reference to the accompanying drawings in the embodiment of the present invention hereinafter. Obviously, the described embodiments are only part embodiments of the present invention, while not all embodiments. Based on the embodiments of the present invention, all other embodiments obtained by those skilled in the art are defined by the appended claims.

In order to achieve the end-to-end communication among the terminals in the situation without increasing additional hardware, the embodiment of the present invention provides a capacitive touchscreen, a terminal and an intercommunication method among the terminals. By using the capacitive touchscreen terminal device of the embodiment of the present invention, the touchscreen interconnection can be performed depending on the frequency signal, and then the wireless interconnection of the terminal devices and the end-to-end communication are achieved. The detailed implementation process of the embodiment of the present invention is explained through several specific embodiments hereinafter.

### Embodiment one

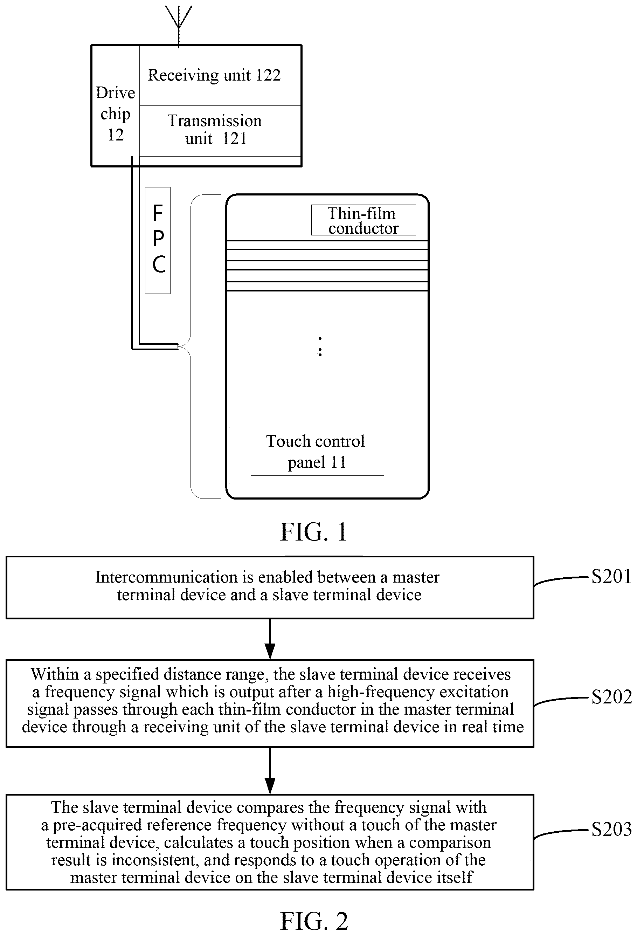

About the end-to-end communication and the interconnection between terminal and terminal, the embodiment of the present invention provides a capacitive touchscreen, which is a new type of touchscreen proposed from the working principle of the capacitive touchscreen; as shown in FIG. 1, the capacitive touchscreen described in the embodiment of the present invention includes: a touch control panel 11 and a drive chip 12 connected thereto, the touch control panel 11 includes a substrate layer at the bottom layer, a thin-film conductor layer at the middle layer, and a protective layer at the top layer; the touch control panel 11 includes three layers, a substrate layer, a thin-film conductor layer and a protective layer; the drive chip includes a transmission unit 121 and a receiving unit 122, herein,
the thin-film conductor layer includes multiple thin-film conductors, and the multiple thin-film conductors are arranged on the substrate layer in a horizontal/vertical direction by taking horizontal/vertical resolution of the touchscreen as a reference; FIG. 1 shows a structure diagram of a thin-film conductor arranged by taking a horizontal resolution as the reference.

Herein, the thin-film conductor can be but is not limited to an indium tin oxide (ITO) material.

The transmission unit is arranged to: generate a high-frequency excitation signal and load the high-frequency excitation signal onto each thin-film conductor; alternatively, the transmission unit loads the high-frequency excitation signal onto each thin-film conductor through a flexible printed circuit (FPC).

The receiving unit is arranged to: receive a frequency signal one by one, in a wireless receiving manner, which is output after the high-frequency excitation signal passes through each thin-film conductor, and determine a touch position according to a change of the frequency signal before and after touch.

Herein, the mode that the receiving unit determines the touch position specifically includes: the receiving unit, for each thin-film conductor, comparing a received frequency signal with a reference frequency without a touch, determining that there is a touch operation when a comparison result is inconsistent, and determining a touch position on the thin-film conductor according to a change amount of the frequency signal.

That is to say, the receiving unit can receive a wireless frequency signal after passing through a RC filter circuit formed by each thin-film conductor, and can determine a row where the touch is located according to whether the frequency value is changed before and after the touch, and then determine a position of the touch in the row according to the change amount of the frequency value.

Alternatively, in the capacitive touchscreen in the present embodiment, the drive chip further includes a band-pass filter, which is arranged to: filter an interference frequency signal received by the receiving unit, to enable the chip to have a capability of shielding other frequency signals.

Based on the above principle description, a specific implementation example is given hereinafter to clarify the specific implementation process of the embodiment of the present invention more clearly.

Continuously as shown in FIG. 1, the capacitive touchscreen of the present implementation example includes a touch control panel and a drive chip. Herein, the touch control panel is composed of a protective glass, a thin-film conductor (ITO) layer and a substrate layer, and the ITO layer is etched with several ITO bars according to the horizontal resolution. The drive chip includes a receiving unit and a transmission unit, herein, the receiving unit is provided with a corresponding antenna to receive the signal, and the transmission unit generates a high-frequency excitation signal to be loaded on each row of the touch control panel, that is, each ITO bar. The working process of the capacitive touchscreen of the present implementation example includes the following procedures:
the drive chip generates a high-frequency excitation signal, and the high-frequency signal is loaded on the ITO bar of each row of the touch control panel through the FPC. When the conductive touch body (such as a finger) does not touch the touch control panel, the characteristics of the RC filter circuit of that row are stable, so the output of the excitation signal after passing through the RC filter circuit of the row is stable as well, which will be regarded as the reference frequency value and wirelessly received and recorded into a memory by the drive chip; if there is a touch, because of the effect of the electric field of the conductive touch body, capacitance will be generated with the ITO layer at the touch point (according to the principle that two charged conductors will generate the capacitance), and then the characteristics of the RC circuit are changed, then the output signal of the row where the point is located will be changed; after the output signal is received by the drive chip, the drive chip compares it with the reference frequency value without a touch and can acquire that there is a touch on that row; the finger touches at different points in the row, then the characteristics of the RC filter circuit are different, and the outputs of the high-frequency excitation signal passing through the row are different as well, and then the chip can determine the position of the point in the row by comparing a difference of that value with the reference frequency value, thus realizing determination of the touch position.

In summary, the capacitive touchscreen of the embodiment of the present invention arranges the thin-film conductors in horizontal or vertical direction, compared with the existing arranging the thin-film conductors in both horizontal and vertical directions, it decreases the etching process and reduces the production costs. In addition, the capacitive touchscreen described in the present embodiment improves the existed drive chip, sets a wireless receiving antenna in the receiving unit, enables the receiving unit to wirelessly receive signals, and provides the necessary technical support for the realization of the end-to-end wireless communication among the terminals.

### Embodiment two

The embodiment of the present invention provides a terminal, and the touchscreen of the terminal is the capacitive touchscreen described in embodiment one. Herein, when the capacitive touchscreen is used for a touch operation, the touchscreen reports the touch position to the CPU of the terminal through the receiving unit, to realize the indication of the touch position.

The terminal of the present embodiment includes the capacitive touchscreen described in embodiment one, therefore, the terminal has the technical effect described in embodiment one, which will not be repeated here.

### Embodiment three

The embodiment of the present invention provides an intercommunication method among terminals, herein, the terminal is the terminal described in embodiment two, and the method is a new method for device interconnection and end-to-end communication, established on the basis of the above new capacitive touchscreen; as shown in FIG 2, the method includes the following steps.

In step S201, intercommunication is enabled between a master terminal device and a slave terminal device.

In the step, enabling the intercommunication between the master terminal device and the slave terminal device includes: the master terminal device transmitting a reference frequency to the slave terminal device, and performing a clock synchronization with the slave terminal device and marking an identification label.

In step S202, within a specified distance range, the slave terminal device receives a frequency signal which is output after a high-frequency excitation signal passes through each thin-film conductor in the master terminal device through a receiving unit of the slave terminal device in real time.

Herein, the specified distance range is a distance range within which the frequency signal output by the master terminal device can be transmitted.

In step S203, the slave terminal device compares the frequency signal with a pre-acquired reference frequency without a touch of the master terminal device, calculates a touch position when a comparison result is inconsistent, and responds to a touch operation of the master terminal device on the slave terminal device itself.

That is to say, when the device interconnection is realized, two or more terminal devices are put in a proper range, the output frequency signal on each row of the master terminal device is received by the receiving unit of the master terminal device, and at the same time, it can also be received by the receiving unit of the slave terminal device, so as to realize the intercommunication between touchscreens, and thus to realize the interconnection between devices.

Alternatively, the embodiment of the present invention takes into account that the screen ratios of the master terminal device and the slave terminal device may be different; in order to prevent the error operation during the interconnection process, when the slave terminal device calculates the touch position, the step further includes: the slave terminal device detecting whether a screen ratio of the master terminal device is same with a screen ratio of the slave terminal device; if yes, directly calculating the touch position; otherwise, calculating the touch position after performing a screen ratio conversion.

Alternatively, in the present embodiment, the slave terminal device responds to the touch operation on its own, and then reports the responding action to the master terminal device and waits for the instruction from the master terminal device.

### Embodiment four

The embodiment of the present invention further discloses a computer program, including program instructions, when the program instructions are executed by a capacitive touchscreen terminal device, the capacitive touchscreen terminal device is enabled to execute the above intercommunication method.

The embodiment of the present invention further discloses a carrier carrying an above mentioned computer program.

Based on the above principle description, a specific implementation example is given hereinafter to clarify the specific implementation process of the method of the embodiment of the present invention more clearly.

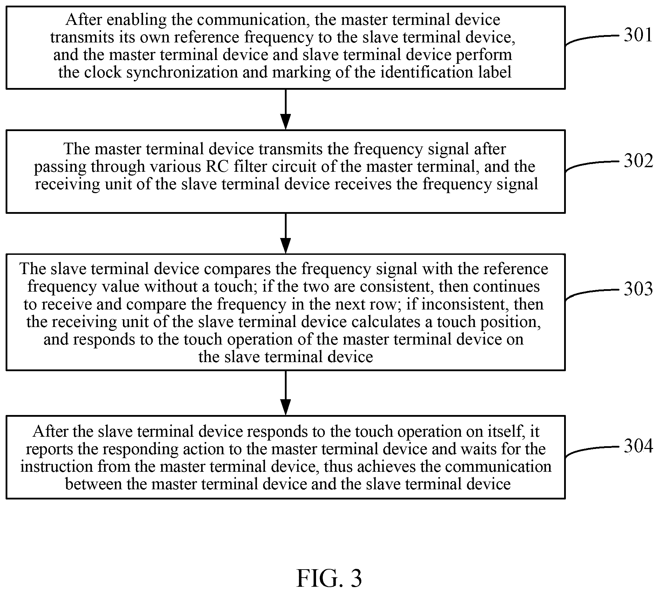

As shown in FIG. 3, through the interconnection between touchscreens, intercommunication between devices is achieved, which specifically includes the following steps.

In step S301, after enabling the communication, the master terminal device transmits its own reference frequency to the slave terminal device, and the master terminal device and slave terminal device perform the clock synchronization and marking the identification label.

In step S302, the master terminal device transmits the frequency signal after passing through the RC filter circuit of the master terminal device, and the receiving unit of the slave terminal device receives the frequency signal.

In step S303, the slave terminal device compares the frequency signal with the reference frequency value without a touch; if the two are consistent, then continues to receive and compare the frequency in the next row; if the two are inconsistent, then the receiving unit of the slave terminal device calculates the touch position, and responds to the touch operation of the master terminal device on the slave terminal device.

In step S304, the slave terminal device responds to the touch operation on itself, and then reports the responding action to the master terminal device and waits for the instruction from the master terminal device, thus achieving the communication between the master terminal device and slave terminal device.

In summary, the method in the embodiment regards the frequency signal as a physical quantify for realizing the touchscreen communication, the high-frequency excitation signal generated by the drive chip of the master terminal device can be received by its own chip after passing through the RC filter circuit, and also can be received by the drive chip of the slave terminal device in a certain range, and the drive chip of the slave terminal device calculates the signal, and then the position is determined and displayed on the slave terminal device, to achieve the intercommunication.

The intercommunication method among the terminals in the present embodiment is a new method which starts from the working principle of the substrate layers of the terminal components of their own, performs the touchscreen interconnection via frequency signals, and then achieves the wireless interconnection of the terminal devices and the end-to-end communication. The method does not need to increase the additional communication facilities, saves the production cost, and has simple operation and convenient popularization.

Obviously, those skilled in the art should understand that each above module or each step of the present invention can be used in all capacitive touchscreen fields, and the present invention can be used on a single touchscreen and can also be used in matching such as in a pair. The above description is only presenting optional embodiments and the scope of the invention is defined in the appended claims.

### Industrial Applicability

The capacitive touchscreen of the technical scheme of the present invention decreases the etching process and reduces the manufacturing cost compared with the relevant capacitive touchscreen. In addition, the capacitive touchscreen in the embodiment of the present invention improves the existed drive chip, sets a wireless receiving antenna in the receiving unit, enables the receiving unit to wirelessly receive signals, and provides the necessary technical support for the realization of the end-to-end wireless communication among the terminals.

The intercommunication method among the terminals in the present embodiment is a new method which starts from the working principle of the substrate layers of the terminal components of their own, performs the touchscreen interconnection via frequency signals, and then achieves the wireless interconnection of the terminal devices and the end-to-end communication. The method does not need to increase the additional communication facilities, saves the production cost, and has simple operation and convenient popularization. Therefore, the present invention has strong industrial practicability.

## Claims

1. A capacitive touchscreen, comprising: a touch control panel (11) and a drive chip (12) connected with the touch control panel (11), wherein, the touch control panel (11) comprises a substrate layer, a thin-film conductor layer and a protective layer covering the thin-film conductor layer;
the thin-film conductor layer comprises a plurality of thin-film conductors, and the plurality of thin-film conductors are arranged on the substrate layer in a horizontal/vertical direction by taking a horizontal/vertical resolution of the touchscreen as a reference;
the drive chip (12) comprises a transmission unit (121) and a receiving unit (122), wherein,
the transmission unit (121) is arranged to: generate a high-frequency excitation signal and load the high-frequency excitation signal onto each thin-film conductor; and
the receiving unit (122) is arranged to: receive a frequency signal one by one, in a wireless receiving manner, which is output after the high-frequency excitation signal passes through each thin-film conductor, and determine a touch position according to a change of the frequency signal before and after the touch,
**characterized in that**, the receiving unit (122) is arranged to determine the touch position according to the change of the frequency signal before and after the touch by the following manner:
for each thin-film conductor, comparing a received frequency signal with a reference frequency without a touch, determining that there is a touch operation when the received frequency signal and the reference frequency without a touch are inconsistent, and determining the touch position on the thin-film conductor according to a difference between the received frequency signal and the reference frequency without a touch.

2. The capacitive touchscreen according to claim 1, wherein, the drive chip further comprises: a band-pass filter, wherein:
the band-pass filter is arranged to: filter an interference frequency signal received by the receiving unit.

3. The capacitive touchscreen according to claim 1, wherein, the transmission unit is arranged to generate the high-frequency excitation signal and load the high-frequency excitation signal onto each thin-film conductor by the following manner:
after generating the high-frequency excitation signal, loading the high-frequency excitation signal onto each thin-film conductor through a flexible printed circuit, FPC.

4. A terminal, comprising a capacitive touchscreen according to any one of claims 1 to 3.

5. An intercommunication method among capacitive touchscreen terminals, **characterized in that** the terminals are terminals according to claim 4, comprising:
enabling intercommunication between a master terminal device and a slave terminal device;
within a specified distance range, the slave terminal device receiving a frequency signal which is output after a high-frequency excitation signal passes through each thin-film conductor in the master terminal device through a receiving unit of the slave terminal device in real time; and
the slave terminal device comparing the frequency signal with a pre-acquired reference frequency without a touch of the master terminal device, calculating a touch position when the received frequency signal and the reference frequency without a touch are inconsistent, and responding to a touch operation of the master terminal device on the slave terminal device itself.

6. The intercommunication method according to claim 5, wherein, a step of enabling intercommunication between the master terminal device and the slave terminal device comprises:
the master terminal device transmitting the reference frequency to the slave terminal device, and performing a clock synchronization with the slave terminal device and marking an identification label.

7. The intercommunication method according to claim 5, wherein, the specified distance range is a distance range within which the frequency signal output by the master terminal device can be transmitted.

8. The intercommunication method according to claim 5 or 6 or 7, wherein, a step of the slave terminal device calculating the touch position comprises:
the slave terminal device detecting whether a screen ratio of the master terminal device is same with a screen ratio of the slave terminal device; if the screen ratio of the master terminal device is the same with the screen ratio of the slave terminal device, directly calculating the touch position; if the screen ratio of the master terminal device is not the same with the screen ratio of the slave terminal device, calculating the touch position after performing a screen ratio conversion.

9. The intercommunication method according to claim 5 or 6 or 7, wherein after a step of the slave terminal device responding to the touch operation on the slave terminal device itself, the method further comprises:
the slave terminal device reporting the responding action to the master terminal device, and waiting for an indication of the master terminal device.

10. A computer program, comprising program instructions, which, when executed by a capacitive touchscreen terminal device of claim 4, enable the capacitive touchscreen terminal device of claim 4 to execute the intercommunication method according to any one of claims 5-9.

11. A carrier carrying the computer program according to claim 10.

## Patentansprüche

1. Kapazitiver Berührungsbildschirm, umfassend: ein Berührungssteuerungsfeld (11) und einen Treiberchip (12), der mit dem Berührungssteuerungsfeld (11) verbunden ist, wobei das Berührungssteuerungsfeld (11) eine Substratschicht, eine Dünnfilmleiterschicht und eine Schutzschicht, die die Dünnfilmleiterschicht bedeckt, umfasst;
die Dünnfilmleiterschicht eine Vielzahl von Dünnfilmleitern umfasst und die Vielzahl von Dünnfilmleitern auf der Substratschicht in einer horizontalen/vertikalen Richtung angeordnet ist, indem eine horizontale/vertikale Auflösung des Berührungsbildschirms als eine Referenz genommen wird;
der Treiberchip (12) eine Übertragungseinheit (121) und eine Empfangseinheit (122) umfasst, wobei
die Übertragungseinheit (121) für Folgendes angeordnet ist: ein Hochfrequenz-Erregungssignal zu erzeugen und das Hochfrequenz-Erregungssignal auf jeden Dünnfilmleiter zu laden; und
die Empfangseinheit (122) für Folgendes angeordnet ist: ein Frequenzsignal, das ausgegeben wird, nachdem das Hochfrequenz-Erregungssignal durch jeden Dünnfilmleiter gelaufen ist, einzeln auf eine drahtlose Empfangsweise zu empfangen und eine Berührungsposition gemäß einer Änderung des Frequenzsignals vor und nach dem Berühren zu bestimmen,
**dadurch gekennzeichnet, dass** die Empfangseinheit (122) dazu angeordnet ist, die Berührungsposition gemäß der Änderung des Frequenzsignals vor und nach dem Berühren auf die folgende Weise zu bestimmen:
für jeden Dünnfilmleiter, Vergleichen eines empfangenen Frequenzsignals mit einer Referenzfrequenz ohne eine Berührung, Bestimmen, dass eine Berührungsoperation vorliegt, wenn das empfangene Frequenzsignal und die Referenzfrequenz ohne eine Berührung nicht übereinstimmen, und Bestimmen der Berührungsposition auf dem Dünnfilmleiter gemäß einer Differenz zwischen dem empfangenen Frequenzsignal und der Referenzfrequenz ohne eine Berührung.

2. Kapazitiver Berührungsbildschirm nach Anspruch 1, wobei der Treiberchip ferner Folgendes umfasst: einen Bandpassfilter, wobei:
der Bandpassfilter für Folgendes angeordnet ist: ein Interferenzfrequenzsignal, das durch die Empfangseinheit empfangen wird, zu filtern.

3. Kapazitiver Berührungsbildschirm nach Anspruch 1, wobei die Übertragungseinheit dazu angeordnet ist, das Hochfrequenz-Erregungssignal zu erzeugen und das Hochfrequenz-Erregungssignal auf die folgende Weise auf jeden Dünnfilmleiter zu laden:
nach dem Erzeugen des Hochfrequenz-Erregungssignals, Laden des Hochfrequenz-Erregungssignals auf jeden Dünnfilmleiter über eine flexible Leiterplatte (flexible printed circuit - FPC).

4. Endgerät, umfassend einen kapazitiven Berührungsbildschirm nach einem der Ansprüche 1 bis 3.

5. Wechselsprechverfahren unter kapazitiven Berührungsbildschirmendgeräten, **dadurch gekennzeichnet, dass** die Endgeräte Endgeräte nach Anspruch 4 sind, umfassend:
Ermöglichen von Wechselsprechen zwischen einem Master-Endgerät und einem Slave-Endgerät;
innerhalb eines festgelegten Abstandsbereichs, Empfangen, durch das Slave-Endgerät, eines Frequenzsignals, das ausgegeben wird, nachdem ein Hochfrequenz-Erregungssignal durch jeden Dünnfilmleiter in dem Master-Endgerät durch eine Empfangseinheit des Slave-Endgeräts in Echtzeit gelaufen ist; und
Vergleichen, durch das Slave-Endgerät, des Frequenzsignals mit einer zuvor erlangten Referenzfrequenz ohne eine Berührung des Master-Endgeräts, Berechnen einer Berührungsposition, wenn das empfangene Frequenzsignal und die Referenzfrequenz ohne eine Berührung nicht übereinstimmen, und Reagieren auf eine Berührungsoperation des Master-Endgeräts an dem Slave-Endgerät selbst.

6. Wechselsprechverfahren nach Anspruch 5, wobei ein Schritt des Ermöglichens von Wechselsprechen zwischen dem Master-Endgerät und dem Slave-Endgerät Folgendes umfasst:
durch das Master-Endgerät, Übertragen der Referenzfrequenz an das Slave-Endgerät und Durchführen einer Taktungssynchronisierung mit dem Slave-Endgerät und Markieren eines Identifikationsschilds.

7. Wechselsprechverfahren nach Anspruch 5, wobei der festgelegte Abstandsbereich ein Abstandsbereich ist, innerhalb dessen der Frequenzsignalausgang durch das Master-Endgerät übertragen werden kann.

8. Wechselsprechverfahren nach Anspruch 5 oder 6 oder 7, wobei ein Schritt des Slave-Endgeräts, das die Berührungsposition berechnet, Folgendes umfasst:
durch das Slave-Endgerät, Erkennen, ob ein Bildschirmverhältnis des Master-Endgeräts das gleiche ist wie ein Bildschirmverhältnis des Slave-Endgeräts; wenn das Bildschirmverhältnis des Master-Endgeräts das gleiche wie das Bildschirmverhältnis des Slave-Endgeräts ist, direktes Berechnen der Berührungsposition; wenn das Bildschirmverhältnis des Master-Endgeräts nicht das gleiche wie das Bildschirmverhältnis des Slave-Endgeräts ist, Berechnen der Berührungsposition nach Durchführen einer Bildschirmverhältnisumwandlung.

9. Wechselsprechverfahren nach Anspruch 5 oder 6 oder 7, wobei das Verfahren nach einem Schritt, dass das Slave-Endgerät auf die Berührungsoperation an dem Slave-Endgerät selbst reagiert, ferner Folgendes umfasst:
durch das Slave-Endgerät, Berichten der Reaktionsaktion an das Master-Endgerät und Warten auf eine Indikation von dem Master-Endgerät.

10. Computerprogramm, umfassend Programmanweisungen, die es bei Ausführung durch ein kapazitives Berührungsbildschirmendgerät nach Anspruch 4 dem kapazitiven Berührungsbildschirmendgerät nach Anspruch 4 ermöglichen, das Wechselsprechverfahren nach einem der Ansprüche 5-9 auszuführen.

11. Träger, der das Computerprogramm nach Anspruch 10 trägt.

## Revendications

1. Écran tactile capacitif, comprenant : un panneau de commande tactile (11) et une puce d'attaque (12) reliée au panneau de commande tactile (11), où, le panneau de commande tactile (1) comprend une couche de substrat, une couche conductrice à film mince et une couche protectrice couvrant la couche conductrice à film mince ;
la couche conductrice à film mince comprend une pluralité de conducteurs à film mince, et la pluralité de conducteurs à film mince sont agencés sur la couche de substrat dans une direction horizontale/verticale en prenant une résolution horizontale/verticale de l'écran tactile comme référence ;
la puce d'attaque (12) comprend une unité de transmission (121) et une unité de réception (122), où,
l'unité de transmission (121) est agencée pour : générer un signal d'excitation haute fréquence et charger le signal d'excitation haute fréquence sur chaque conducteur à film mince ; et
l'unité de réception (122) est agencée pour : recevoir un signal de fréquence un par un, par réception sans fil, qui est délivré en sortie après que le signal d'excitation haute fréquence traverse chaque conducteur à film mince, et déterminer une position de contact selon un changement du signal de fréquence avant et après le contact,
**caractérisé en ce que** l'unité de réception (122) est agencée pour déterminer la position de contact selon le changement du signal de fréquence avant et après le contact de la manière suivante :
pour chaque conducteur à film mince, en comparant un signal de fréquence reçu à une fréquence de référence sans contact, en déterminant qu'il y a une opération de contact lorsque le signal de fréquence reçu et la fréquence de référence sans contact sont incohérents, et en déterminant la position de contact sur le conducteur à film mince selon une différence entre le signal de fréquence reçu et la fréquence de référence sans contact.

2. Écran tactile capacitif selon la revendication 1, dans lequel la puce d'attaque comprend en outre : un filtre passe-bande, où :
le filtre passe-bande est agencé pour : filtrer un signal de fréquence d'interférence reçu par l'unité de réception.

3. Écran tactile capacitif selon la revendication 1, dans lequel l'unité de transmission est agencée pour générer le signal d'excitation haute fréquence et pour charger le signal d'excitation haute fréquence sur chaque conducteur à film mince de la manière suivante :
après avoir généré le signal d'excitation haute fréquence, en chargeant le signal d'excitation haute fréquence sur chaque conducteur à film mince à travers un circuit imprimé souple, FPC.

4. Terminal comprenant un écran tactile capacitif selon l'une quelconque des revendications 1 à 3.

5. Procédé d'intercommunication entre terminaux à écrans tactiles capacitifs, **caractérisé en ce que** les terminaux sont des terminaux selon la revendication 4, comprenant le fait :
de permettre une intercommunication entre un dispositif terminal maître et un dispositif terminal esclave ;
dans une plage de distance spécifiée, par le biais du dispositif terminal esclave, de recevoir un signal de fréquence qui est délivré en sortie après qu'un signal d'excitation haute fréquence traverse chaque conducteur à film mince dans le dispositif terminal maître par une unité de réception du dispositif terminal esclave en temps réel ; et
par le biais du dispositif terminal esclave, de comparer le signal de fréquence à une fréquence de référence pré-acquise sans contact du dispositif terminal maître, de calculer une position de contact lorsque le signal de fréquence reçu et la fréquence de référence sans contact sont incohérents, et de répondre à une opération de contact du dispositif terminal maître sur le dispositif terminal esclave lui-même.

6. Procédé d'intercommunication selon la revendication 5, dans lequel une étape consistant à permettre une intercommunication entre le dispositif terminal maître et le dispositif terminal esclave comprend le fait :
par le biais du dispositif terminal maître, de transmettre la fréquence de référence au dispositif terminal esclave, et de réaliser une synchronisation d'horloge avec le dispositif terminal esclave et de marquer une étiquette d'identification.

7. Procédé d'intercommunication selon la revendication 5, dans lequel la plage de distance spécifiée est une plage de distance dans laquelle le signal de fréquence délivré en sortie par le dispositif terminal maître peut être transmis.

8. Procédé d'intercommunication selon la revendication 5 ou 6 ou 7, dans lequel une étape consistant à calculer la position de contact par le biais du dispositif terminal esclave comprend le fait :
par le biais du dispositif terminal esclave, de détecter si un rapport d'aspect du dispositif terminal maître est identique à un rapport d'aspect du dispositif terminal esclave ; si le rapport d'aspect du dispositif terminal maître est identique au rapport d'aspect du dispositif terminal esclave, de calculer directement la position de contact ; si le rapport d'aspect du dispositif terminal maître n'est pas identique au rapport d'aspect du dispositif terminal esclave, de calculer la position de contact après avoir réalisé une conversion de rapport d'aspect.

9. Procédé d'intercommunication selon la revendication 5 ou 6 ou 7, dans lequel, après une étape consistant à répondre, par le biais du dispositif terminal esclave, à l'opération de contact sur le dispositif terminal esclave lui-même, le procédé comprend en outre le fait :
par le biais du dispositif terminal esclave, de signaler l'action de réponse au dispositif terminal maître, et d'attendre une indication du dispositif terminal maître.

10. Programme informatique, comprenant des instructions de programme, qui, lorsqu'elles sont exécutées par un dispositif terminal à écran tactile capacitif de la revendication 4, permettent au dispositif terminal à écran tactile capacitif de la revendication 4 d'exécuter le procédé d'intercommunication selon l'une quelconque des revendications 5 à 9.

11. Support portant le programme informatique selon la revendication 10.
